# FASCICULE DE BREVET EUROPEEN

(11) **EP 2 163 853 B1**
(45) Date de publication et mention de la délivrance du brevet: **11.12.2013**
(21) Numéro de dépôt: 09358006.6
(22) Date de dépôt: 19.08.2009
(51) Int. Cl.: G01D 5/14, A01G 3/033

(54) **Outil électroportatif muni d'un dispositif permettant de déterminer la position relative entre deux organes dudit outil dont l'un au moins est mobile.**
Ortsveränderliches Elektrowerkzeug, das mit einer Vorrichtung ausgestattet ist, mit der die relative Position zwischen zwei Organen des besagten Werkzeugs bestimmt werden kann, von denen mindestens eines beweglich ist
Portable electric tool equipped with a device for determining the relative position between two elements of said tool of which at least one is mobile.

(30) Priorité: 22.08.2008 FR 0804678
(43) Date de publication de la demande: 17.03.2010
(73) Titulaire: PELLENC (Société Anonyme), 84120 Pertuis (FR)
(72) Inventeur: Pellenc, Roger, 84120 Pertuis (FR)
(74) Mandataire: Marek, Pierre

(56) Documents cités:
- EP-A- 0 291 431
- EP-A- 0 997 706
- EP-A- 1 074 818
- DE-A1- 19 612 422
- FR-A- 2 898 189

## Description

La présente invention concerne un outil électroportatif muni d'un dispositif permettant de déterminer avec précision, en continu et sans contact, la position relative entre deux pièces coopérantes de deux organes coopérants dudit outil dont l'un au moins est mobile selon un déplacement linéaire ou angulaire. Elle s'applique aux outils électroportatifs et en particulier, bien que non exclusivement, aux sécateurs électroniques ou outils analogues comportant des lames de coupe à fermeture contrôlable.

Dans les dispositifs permettant de déplacer linéairement ou angulairement un organe mobile suivant un ordre défini par l'utilisateur, on trouve le plus souvent deux éléments coopérants tels que, dans l'application aux outils électroportatifs :
- une commande qui donne l'ordre et qui peut être constituée par une gâchette ;
- un actionneur qui réalise l'action et qui peut être relié au moteur par un système de transmission.

La liaison entre la commande et l'actionneur est assurée électroniquement par une carte de contrôle comportant un microprocesseur et qui, en outre, doit mesurer le déplacement linéaire ou angulaire de l'actionneur pour vérifier que l'ordre de commande est bien exécuté.

Il existe actuellement une diversité de dispositifs permettant de réaliser cette fonction avec leurs avantages propres et surtout leurs inconvénients inhérents.

On connaît, par exemple, des systèmes de capteurs linéaires ou angulaires potentiomètriques servant à mesurer un déplacement par variation de la valeur de leur résistance, cette variation est linéaire et elle est traitée par une carte électronique de commande. Ces capteurs linéaires ou angulaires potentiomètriques ont pour principaux inconvénients d'avoir deux pièces en contact qui coulissent l'une sur l'autre et qui sont chacune fixée sur l'une des pièces en mouvement, ces dispositifs sont d'une longueur égale à la course (linéaire ou angulaire) donc encombrants, et leur usure liée à leur frottement entraîne une précision changeante dans le temps et une durée de vie relativement faible.

Pour éviter d'avoir un contact entre les pièces en mouvement, on connaît des systèmes utilisant plusieurs capteurs à effet Hall C1, C2, C3, C4, C5, montés successivement sur la pièce fixe et un aimant à magnétisation radiale fixé sur la pièce mobile, les capteurs à effet Hall délivrant un signal lorsque l'on présente devant eux un champ magnétique.

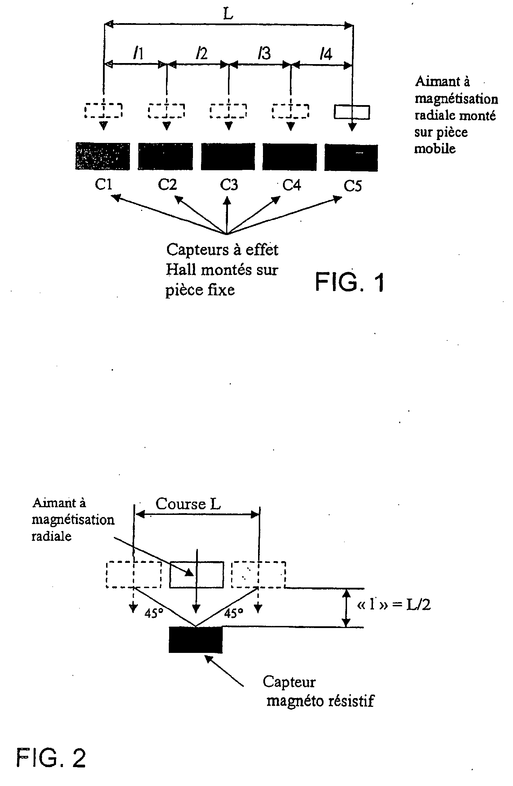

Cette solution illustrée par le schéma de la figure 1 a pour inconvénients de nécessiter l'utilisation d'un nombre important de capteurs coûteux et, surtout ne permet pas de connaître avec exactitude, la position de la pièce en mouvement entre deux capteurs, ce qui ne donne qu'une faible précision. La course totale L est la somme des déplacements I1+I2+I3+I4, la précision est donc d'un déplacement entre deux capteurs. Il est impossible de connaître avec précision n'importe quelle position de déplacement sans avoir une infinité de capteurs ce qui est physiquement impossible.

On connaît aussi des systèmes, utilisant un capteur magnéto résistif (dont la particularité est de mesurer l'inclinaison des lignes de champs dans un champ magnétique) associé à un aimant à aimantation radiale (la magnétisation est réalisée perpendiculairement à l'aimant).

Cette solution illustrée par le schéma de la figure 2, a pour avantage d'être simple, sans contact, mais elle a également pour inconvénient de manquer de précision et de nécessiter une distance importante entre le capteur et l'aimant, surtout pour une course importante. Sur ce schéma, on peut constater que, pour une course donnée, on mesure en fin de course, une inclinaison de 45° de la ligne de champ de l'aimant, la distance entre l'aimant et le capteur « I » doit donc être de U2. De fait, plus la course est grande, plus la distance « I » augmente. En outre, plus la distance augmente, plus le champ magnétique de l'aimant doit être fort pour pouvoir être détecté par le capteur.

On connait encore (DE-19.612.422, EP-0.997.706, EP-1.074.818, FR-2.898.189) un dispositif de détermination de la position relative entre deux pièces coopérantes dont l'une au moins est mobile selon un mouvement linéaire, l'une de ces pièces étant munie d'un aimant à magnétisation orientée, alors que l'autre pièce est munie d'un capteur magnéto résistif, le procédé permettant d'analyser les informations électriques analogiques émises par le capteur magnéto résistif suivant l'inclinaison des lignes de champ magnétique qui lui sont présentées pour déterminer avec précision la position relative entre les deux pièces.

L'invention concerne l'intégration de tels dispositifs aux outils électroportatifs et plus particulièrement aux sécateurs électriques ou outils de coupe analogues pour lesquels il est avantageux de connaitre et de contrôler très précisément, en continu et sans contact d'éléments mécaniques, le sens du mouvement et la position entre au moins deux pièces coopérantes de tels outils.

De manière connue en soi, ces sécateurs électriques comportent au moins une lame de coupe mobile montée à l'extrémité antérieure d'un corps conformé pour servir de poignée et à l'intérieur duquel est logé un motoréducteur électrique dont la sortie est reliée à ladite lame mobile par l'intermédiaire d'une pièce mobile d'entraînement ou actionneur, et une gâchette pivotante accessible à l'extérieur du corps permettant d'actionner un dispositif de commande électrique.

Il est connu d'intégrer à ces outils des dispositifs permettant de contrôler de façon plus ou moins précise la position de l'actionneur de la lame et, par conséquent, celle de ladite lame, lors de l'ouverture et lors de la fermeture de cette dernière, en fonction de l'ordre de commande donné par l'utilisateur, par l'intermédiaire de la gâchette, de façon à asservir le déplacement de ladite lame à celui de ladite gâchette dans un souci de précision de taille, de confort et de sécurité.

Dans le document FR-2 614 568, est décrit un outil électrique portable à asservissement en position selon lequel la pièce mobile d'entraînement de la lame pivotante est constituée par l'écrou d'un système vis-écrou à billes qui peut être animé d'un mouvement axial dans une direction ou dans l'autre suivant le sens de rotation de la vis, et la gâchette pivotante permettant d'actionner le dispositif de commande électrique est assujettie audit écrou dont elle suit, par conséquent, les déplacements linéaires. Ces trajets rectilignes de la gâchette limitent la longueur de la course de l'écrou à la longueur du doigt de l'utilisateur. En outre, l'ensemble du dispositif de commande électrique se déplaçant avec l'écrou, il est nécessaire de relier ledit ensemble et la prise de connexion au moyen d'une liaison flexible ou d'un circuit souple, de sorte que l'usure de ce circuit souple peut occasionner des dysfonctionnements.

Selon le document FR-2.770.372, sont décrit différents modes de réalisation d'un outil de coupe portatif actionné mécaniquement et selon lesquels la position de la lame mobile de coupe est détectée par différents dispositifs utilisant un ou plusieurs potentiomètres tantôt linaires et tantôt rotatifs, voir en utilisant un dispositif mixte de potentiomètre linéaire et rotatif. On remarque que, dans tous les cas, chaque potentiomètre doit être relié, d'une part, à une pièce en mouvement et, d'autre part, au corps fixe de l'outil au moyen de rainures oblongues pour un bon fonctionnement : pour transformer certains mouvements rotatifs en mouvements linéaires et du fait que l'on n'a pas forcement les mêmes centres de rotation pour la pièce mobile et le potentiomètre dans le cas de potentiomètres rotatifs. Le principal inconvénient de ces dispositifs, est que la présence d'un jeu fonctionnel au niveau des rainures oblongues est indispensable et que, par conséquence, ce jeu introduit forcement une erreur sur la valeur du positionnement délivrée par les potentiomètres, cette erreur augmentant avec l'usure due au fonctionnement. D'autres inconvénients découlent du fait que les potentiomètres sont des composants qui ont deux pistes en contact permanent qui s'usent très vite si l'on effectue un nombre important de manoeuvres ; de plus, ce sont des composants coûteux et encombrants.

Dans le document WO-2005/084416, est décrit un outil de coupe portatif actionné mécaniquement et selon lequel la position de la lame mobile de coupe est détectée par une pluralité de capteurs à effet Hall répartis, en arc de cercle, sur un élément fixe du corps de l'outil, de sorte à permettre la détection des mouvements angulaires d'un aimant fixé sur un élément solidaire de ladite lame de coupe pivotante. Ce dispositif a pour inconvénients de ne pas permettre de connaître avec une grande précision la position de la lame de coupe pivotante (la précision est égale à l'angle entre deux capteurs) et d'être onéreux compte tenu de l'obligation d'utiliser une pluralité de capteurs à effet Hall coûteux.

Un autre objet de l'invention est donc de mettre à la disposition des utilisateurs, des sécateurs électriques exempts des inconvénients précédemment exposés des outils de coupe électriques connus, et permettant d'améliorer la précision et la rapidité des travaux de taille, ainsi qu'une plus grande sécurité pour les utilisateurs en asservissant de façon très précise la position d'ouverture de la lame à la position de la gâchette commandée par l'utilisateur.

Les sécateurs électriques auxquels est applicable l'invention comportent au moins un organe actif mobile monté à l'extrémité antérieure d'un corps conformé pour servir de poignée et à l'intérieur duquel est logé un moto réducteur électrique dont la sortie est reliée audit organe actif mobile par l'intermédiaire d'un système de transmission, ces sécateurs électriques comprennent encore une gâchette pivotante accessible à l'extérieur du corps et un dispositif de commande électronique actionné par cette dernière, relié à la carte de commande électronique du moto réducteur.

L'outil électroportatif selon l'invention comprend notamment :
- d'une part, un actionneur comportant deux pièces coopérantes dont l'une au moins est mobile suivant un mouvement linéaire ou angulaire, la pièce mobile de cet actionneur assurant les déplacements dudit organe mobile ; et
- d'autre part, un dispositif de commande permettant de commander le fonctionnement de l'actionneur, ce dispositif comprenant deux pièces coopérantes dont l'une au moins est mobile suivant un mouvement linéaire ou angulaire ;
et cet outil électroportatif est notamment remarquable en ce que l'une des pièces coopérantes dudit actionneur et dudit dispositif de commande est munie d'un aimant à magnétisation orientée, alors que l'autre pièce est munie d'un capteur magnéto résistif ;
ledit outil électroportatif comportant encore une carte électronique de contrôle et gestion comprenant un microprocesseur, cette carte électronique étant configurée pour permettre d'analyser les informations électriques analogiques ou numériques émises par chaque capteur magnéto résistif suivant l'inclinaison des lignes de champ magnétique qui lui sont présentées, pour commander le fonctionnement de l'actionneur afin de positionner avec précision l'organe mobile, suivant la position du dispositif de commande.

Plus précisément :
- d'une part, un capteur magnéto résistif est monté fixement sur un élément du corps, ou sur un élément solidaire du corps, et la gâchette, de préférence l'extrémité libre de celle-ci, est munie d'un aimant à lignes de champ magnétique orientées, qui peut être déplacé en regard dudit capteur magnéto résistif, par le pivotement de ladite gâchette ; et,
- d'autre part, un capteur magnéto résistif est monté fixement dans le corps de l'outil, et un aimant à lignes de champ magnétique orientées est rendu solidaire de l'écrou mobile du système vis-écrou à billes, et cet aimant à lignes de champ magnétique orientées peut être déplacé en regard dudit capteur magnéto résistif, par l'activation dudit système vis-écrou.

Il est à noter que le système vis-écrou peut être à écrou mobile et vis en rotation ou inversement, sachant entre autre que le système vis-écrou qui génère un mouvement de translation à partir d'un mouvement de rotation peut être remplacé par un système de came ou bien de bielle manivelle ou un dispositif équivalent.

Grâce à l'agencement ci-dessus, il est possible de connaître la position de la gâchette et donc l'ordre émis par l'utilisateur ainsi que la position de l'organe actif mobile qui actionne la lame, en connaissant ces deux positions en permanence et avec précision, on peut asservir la position de la lame à celle de la gâchette par l'intermédiaire de la carte électronique qui commande le moto réducteur, et celle de l'organe actif mobile qui actionne ladite lame.

Plus généralement, l'invention est constituée par un agencement original des outils électroportatifs, en particulier des sécateurs électriques ou électroniques, suivant lequel des dispositifs particuliers, bien que connus en soi, ont été adoptés pour obtenir la détermination de la position relative entre des organes coopérants essentiels de ces appareils, constitués, respectivement, par l'actionneur de leur lame mobile et par la gâchette du dispositif de commande de cet actionneur, ces dispositifs étant gérés par une carte électronique de commande de l'actionneur permettant d'assujettir les déplacements de la lame à celui de la gâchette.

Le sécateur électrique ou outil de coupe analogue selon l'invention procure en outre d'autres avantages intéressants. Par exemple :
- il ne comporte pas de composants électroniques en mouvement, ce qui assure une meilleure fiabilité de fonctionnement ;
- il autorise une faible distance entre les composants du dispositif de détection (aimant à magnétisation orientée et capteur magnéto résistif), ce qui évite la nécessité d'utiliser des aimants à forte aimantation et permet une réduction de volume de l'outil ;
- il n'y a pas de contact entre les composants du dispositif de détection et, par conséquent, pas d'usure de ces derniers ;
- il ne nécessite pas l'utilisation d'aimants à forte aimantation ;
- il permet une lecture directe de la position de l'actionneur à partir de l'inclinaison des lignes de champ magnétique des aimants, il n'est donc pas nécessaire d'effectuer des calculs pour connaître cette position.

Les buts, caractéristiques et avantages ci-dessus, et d'autres encore, ressortiront mieux de la description qui suit et des dessins annexés dans lesquels :
La figure 1 est un schéma d'un premier dispositif de détection connu utilisable dans un système permettant de connaître la position d'une pièce mobile.
La figure 2 est un schéma d'un autre dispositif de détection connu.
La figure 3 est un schéma d'un premier mode de mise en oeuvre d'un autre procédé de détection connu, applicable dans un système permettant de connaître la position d'une pièce mobile à déplacement linéaire.
La figure 4 est un schéma d'un deuxième mode de mise en oeuvre du procédé de détection illustré à la figure 3, applicable dans un système permettant de connaître la position d'une pièce mobile à déplacement angulaire.

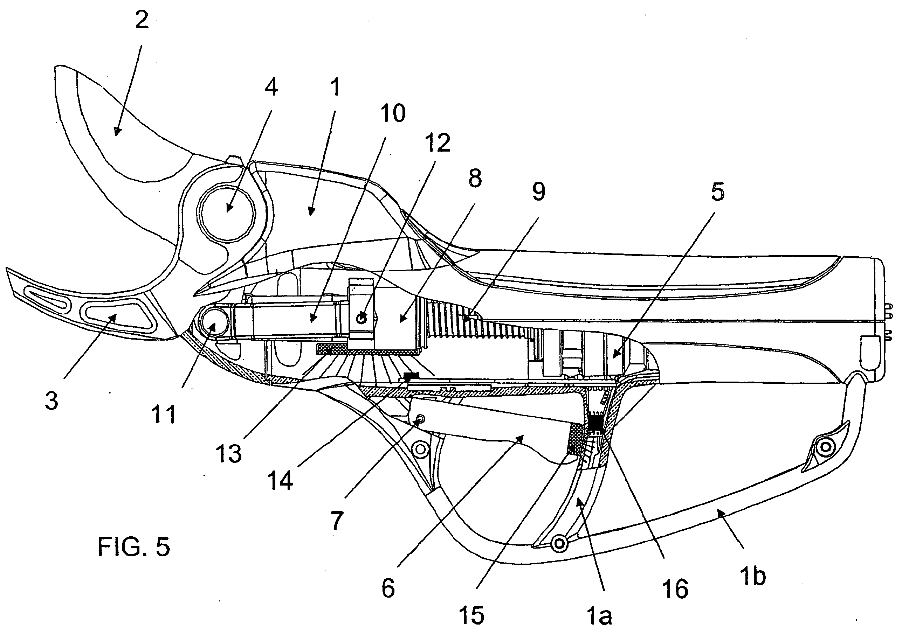

La figure 5 est une vue en élévation, avec coupes partielles, d'un sécateur électrique selon l'invention.

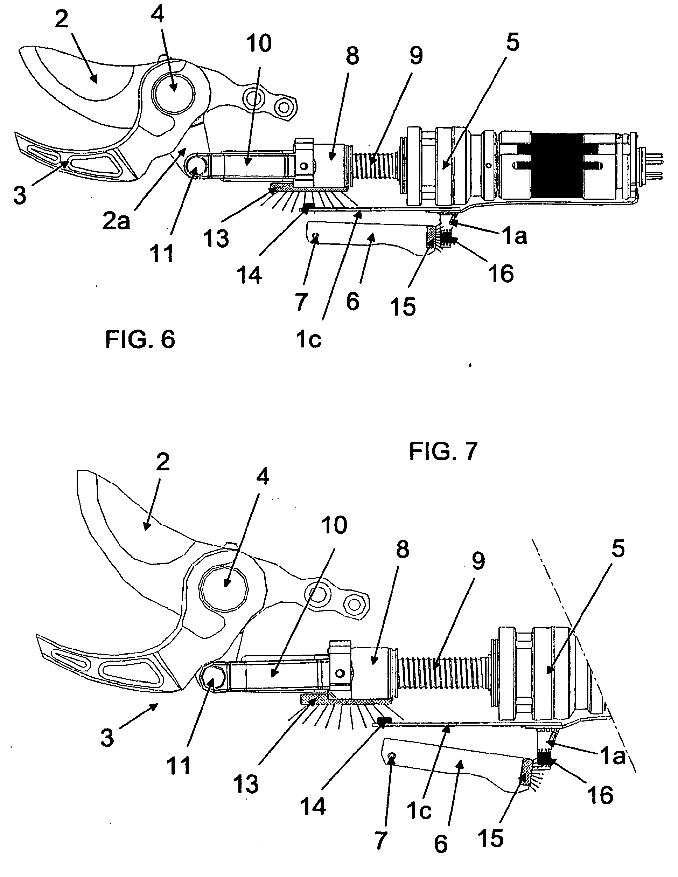

La figure 6 est une vue en élévation très simplifiée de ce sécateur.
La figure 7 est une vue de détail de la figure 6, à plus grande échelle, montrant les principaux composants du sécateur concernés par l'invention, la lame mobile de ce dernier étant montrée en position de complète ouverture.

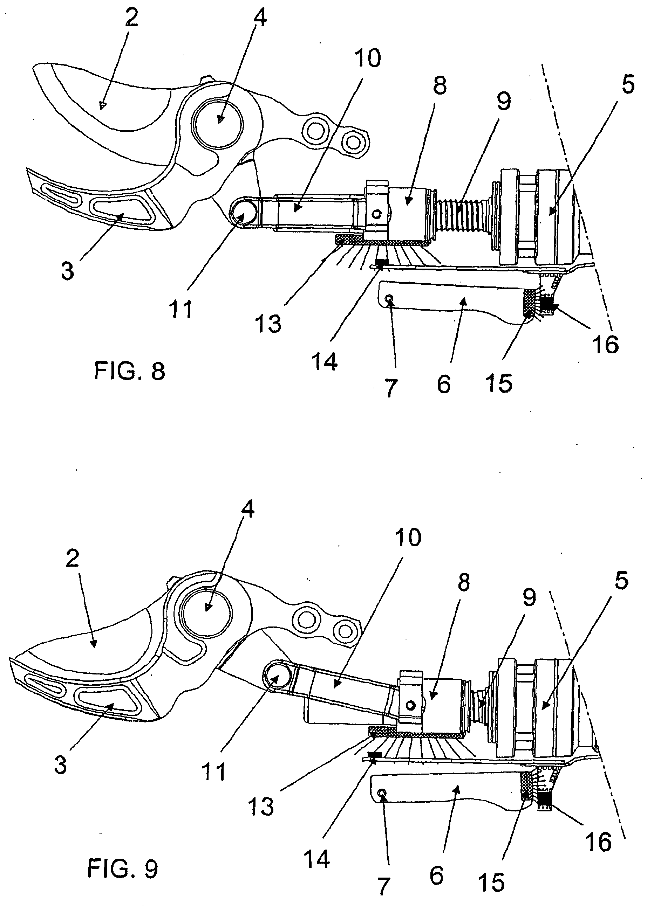

La figure 8 est une vue de détail analogue à la figure 7 et montrant la lame mobile en position d'ouverture partielle (mi-ouverture).
La figure 9 est une vue de détail analogue aux figures 7 et 8 et montrant la lame mobile en position de fermeture.

On se réfère audits dessins pour décrire un exemple intéressant, quoique non limitatif, de réalisation d'un outil électroportatif selon l'invention qui, selon cet exemple avantageux, est constitué par un sécateur électrique.

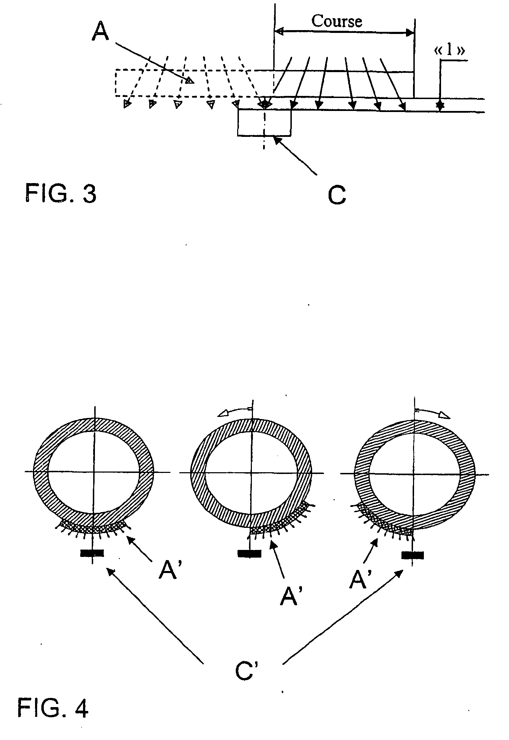

Les schémas des figures 3 et 4 illustrent deux exemples de mise en oeuvre du procédé de détermination de la position relative entre deux pièces coopérantes dont l'une au moins est mobile, des mécanismes électromagnétiques assurant le fonctionnement des outils électroportatifs selon l'invention.

Selon ce procédé connu en soi, ladite pièce mobile est rendue solidaire d'un aimant A à magnétisation orientée, c'est-à-dire d'un aimant dont les lignes de champ magnétique sont inclinées de manière inverse à partir de son centre, cet aimant à magnétisation orientée étant déplacé devant un capteur magnéto résistif C fixé sur une pièce fixe 1c.

Selon le mode de mise en oeuvre représenté par le schéma de la figure 3, l'aimant A est censé être fixé sur une pièce mobile à déplacement linéaire.

Le tracé en traits pleins et le tracé en traits pointillés illustrent les deux positions extrêmes de l'aimant à magnétisation orientée A, par rapport au capteur magnéto résistif C.

Selon le deuxième mode de mise en oeuvre illustré par le schéma de fonctionnement de la figure 4, un aimant courbe à magnétisation orientée A' est fixé sur une pièce cylindrique P à déplacement angulaire. Sur cette figure, sont représentées trois positions de l'aimant à magnétisation orientée A' par rapport au capteur magnéto résistif C :
- sur le coté gauche de la figure, l'aimant A' est représenté dans une position centrale ;
- la partie centrale de la figure, montre un déplacement angulaire sénestrorsum de la pièce P et de l'aimant A' ;
- tandis que sur la droite de la figure, l'aimant A' est représenté après un déplacement dextrorsum.

Dans les trois positions, et dans toute position intermédiaire comprise entre ses positions extrêmes, les lignes de champ magnétique de l'aimant à magnétisation orientée A' sont détectées par le capteur magnéto résistif C.

Il est aussi connu que les lignes du champ magnétique de l'aimant A' sont inclinées progressivement de manière proportionnelle à leur distance par rapport au centre dudit aimant, par exemple de 1° pour 1 mm, puis de 2° pour 2 mm, et ainsi de suite.

En utilisant un capteur magnéto résistif qui permet de connaître le degré d'inclinaison des lignes du champ magnétique de l'aimant, il est possible d'en déduire la valeur angulaire du déplacement de l'aimant et, par conséquent, de la pièce P (1 mm pour 1°, selon l'exemple ci dessus).

Cette déduction et la gestion du déplacement mesuré sont réalisées par une carte électronique de contrôle comprenant un microprocesseur et qui reçoit les signaux émis du capteur C.

L'invention se rattache à un outil électroportatif comportant un corps 1 conformé pour servir de poignée et à l'une des extrémités duquel est monté un organe actif mobile 2 dont les déplacements sont assurés par un actionneur 8 et un dispositif de commande 6 permettant de commander le fonctionnement dudit actionneur, via une carte électronique de commande et de contrôle, et cet outil électroportatif est notamment remarquable en ce que ledit actionneur 8 fait application du dispositif de détermination de la position relative entre deux pièces dont l'une au moins est mobile, se déplaçant suivant un mouvement linéaire ou angulaire précédemment décrit ;
et/ou ;
en ce que le dispositif de commande 6 fait application de ce dispositif de détermination de la position relative entre l'une de ces pièces dont l'une au moins est mobile.

On décrit ci-après une application très avantageuse de l'invention aux sécateurs électriques ou électroniques. On rappelle cependant que celle-ci peut s'appliquer à d'autres outils électroportatifs à lames de coupe tels que cisailles.

Les sécateurs électriques ou électroniques comprennent généralement un corps évidé 1 conformé pour servir de poignée et à l'extrémité antérieure duquel est montée une tête de coupe comportant au moins un organe actif mobile 2. Généralement, cet organe actif est constitué par une lame de coupe pivotante montée sur une contre-lame ou crochet fixe 3, au moyen d'un axe d'articulation 4. A l'intérieur du corps 1, est logé un motoréducteur 5 dont la sortie est reliée audit organe actif mobile 2 par l'intermédiaire d'un système de transmission. Ces sécateurs électriques ou électroniques comportent encore un dispositif de commande constitué par une gâchette 6 montée avec une aptitude de pivotement autour d'un axe 7 et accessible à l'extérieur du corps 1.

Selon un mode d'exécution avantageux, le système de transmission reliant la sortie du motoréducteur 5 à la lame mobile 2 comprend une pièce mobile d'entraînement constituée par l'écrou 8 d'un système vis-écrou 8-9 et un couple de biellettes 10.

La vis rotative 9 est accouplée à la sortie du motoréducteur 5, tandis que l'écrou 8 mobile axialement est relié, au moyen du couple de biellettes 10 et d'articulations, à un prolongement ou levier 2a que présente la lame pivotante 2.

Plus précisément, les biellettes 10 sont accouplées, au moyen d'articulations 11 et 12, respectivement, au prolongement 2a de la lame pivotante 2 et au corps de l'écrou 8 constituant l'actionneur de l'outil. De la sorte, tout déplacement linéaire de ce dernier entraîne, par l'intermédiaire des biellettes 10, un mouvement de pivotement de la lame mobile 2 autour de l'axe 4, pour fermer ou ouvrir ladite lame par rapport à la lame fixe ou crochet 3.

Selon une disposition caractéristique, l'outil électroportatif comporte :
- d'une part, un aimant à lignes de champ magnétique orientées 13 monté fixement sur l'écrou mobile 8, et un capteur magnéto résistif 14 monté fixement dans le corps 1, à un emplacement devant lequel se déplace ledit aimant à magnétisation orientée 13 lors des déplacements linéaires d'avance et de recul dudit écrou 8,
- d'autre part, un aimant à lignes de champ magnétique orientées 15 fixé sur la gâchette 6, de préférence sur l'extrémité libre de celle-ci, et, dans un élément 1a du corps 1, ou sur un élément solidaire du corps, est monté fixement un capteur magnéto résistif 16, à un emplacement devant lequel peut se déplacer ledit aimant à magnétisation orientée 15 équipant l'extrémité libre de la gâchette pivotante 6, lors des mouvements de pivotement de celle-ci.

De manière avantageuse, le capteur magnéto résistif 16 est monté fixement dans une pièce de liaison 1a reliant rigidement le corps 1 et la garde de protection 1b de l'outil ce qui a pour avantage de renforcer cette garde et de rendre l'utilisation de l'outil plus confortable, surtout lorsqu'on travaille en hauteur pour éviter que celui-ci ne recule dans la main.

Les signaux issus du capteur magnéto résistif 14 sont transmis à une carte électronique de contrôle (non représentée) configurée et programmée pour assurer la commande du motoréducteur 5, et, de la sorte, la commande de la fermeture ou de l'ouverture de la lame mobile 2 et aussi l'arrêt de celle-ci dans n'importe quelle position intermédiaire comprise entre la fermeture et la complète ouverture.

Les signaux issus du capteur magnéto résistif 16 sont transmis à une carte électronique de contrôle (non représentée) configurée et programmée pour assurer la commande du motoréducteur 5 ; cette carte électronique de commande peut être la même que celle qui reçoit les signaux issus du capteur magnéto résistif 14.

Plus précisément, cette carte électronique de contrôle et de gestion comprenant un microprocesseur est configurée pour permettre d'analyser les informations électriques analogiques ou numériques émises par chaque capteur magnéto résistif 14, 16, suivant l'inclinaison des lignes de champ magnétique qui lui sont présentées, pour commander le fonctionnement de l'actionneur 8 afin de positionner avec précision l'organe mobile 2, suivant la position du dispositif de commande 6.

On comprend que l'invention peut être appliquée aussi bien au système de commande de l'actionneur 8 de la lame pivotante 2 (aimant à magnétisation orientée 13 et capteur magnéto résistif 14), pour connaître et maîtriser l'ouverture de celle-ci, qu'au système de commande comprenant la gâchette 6 (aimant à magnétisation orientée 15 et capteur magnéto résistif 16) pour connaître la course de déplacement de ladite gâchette de commande.

On comprend aussi que lorsqu'on déplace d'un certain angle (valeur de déplacement de la lame 2 désirée par l'utilisateur) la gâchette 6 et donc l'aimant à magnétisation orientée 15 qui lui est associé, le capteur magnéto résistif 16 lit un angle d'inclinaison du champ magnétique dudit aimant 15 correspondant au déplacement angulaire de ladite gâchette 6.

Cette valeur lue par le capteur magnéto résistif 16, est transmise à la carte électronique de commande et de contrôle du motoréducteur 5 qui donne l'ordre à celui-ci de se mettre en mouvement pour actionner, dans le sens souhaitable le dispositif vis-écrou à billes 8-9, afin de déplacer la lame 2 par l'intermédiaire des biellettes 10.

Lorsque l'écrou 8 se déplace pour effectuer cette action, l'aimant à magnétisation orientée 13 qui est fixé sur ledit écrou, se déplace devant le capteur magnéto résistif 14 fixé dans le corps 1 de l'outil.

Lorsque le capteur magnéto résistif 14 lit un angle d'inclinaison du champ magnétique de l'aimant à magnétisation orientée 13 correspondant au déplacement commandé par la carte électronique de contrôle celle-ci arrête immédiatement le motoréducteur 5.

On conçoit qu'il est de la sorte possible de maîtriser avec précision la position de la lame 2 aussi bien lors de la fermeture que lors de l'ouverture et donc de l'asservir de façon précise à la position de la gâchette commandée par l'utilisateur.

En bref, l'invention consiste à intégrer, à des emplacements déterminés d'outils électroportatifs tels que sécateurs électriques ou électroniques, des dispositifs particuliers de détermination de la position relative entre des organes coopérants essentiels de ces appareils, constitués, respectivement, par l'actionneur de leur lame mobile et par la gâchette du dispositif de commande de cet actionneur, ces dispositifs étant gérés par une carte électronique permettant d'asservir, de façon très précise, les déplacements de la lame à celui de la gâchette.

Bien évidemment, il serait possible, pour la gâchette et dans le cas de sécateurs dont la lame est actionnée directement par un dispositif rotatif et non linéaire (par exemple des sécateurs du genre décrit dans les documents FR-2 670 372, WO-2005/084 416), d'appliquer la solution constructive décrite pour les mouvement angulaires et illustrée par la figure 4.

## Revendications

1. Outil électroportatif, en particulier sécateur électrique ou électronique, du genre comportant un corps (1) conformé pour servir de poignée et à l'une des extrémités duquel est monté un organe actif mobile (2) et comprenant :
- d'une part, un actionneur (8) comportant deux pièces coopérantes (8, 1c) dont l'une (8) au moins est mobile suivant un mouvement linéaire ou angulaire, la pièce mobile (8) de cet actionneur assurant les déplacements dudit organe mobile (2) ; et
- d'autre part, un dispositif de commande (6) permettant de commander le fonctionnement de l'actionneur (8), ce dispositif comprenant deux pièces coopérantes (6, 1 a) dont l'une (6) au moins est mobile suivant un mouvement linéaire ou angulaire ;
**caractérisé en ce que** :
- d'une part, l'une des pièces coopérantes dudit actionneur (8) est munie d'un aimant (13) à magnétisation orientée, alors que l'autre pièce (1c) est munie d'un capteur magnéto résistif (14), et,
- d'autre part, **en ce que** l'une des pièces coopérantes dudit dispositif de commande (6) est munie d'un aimant (15) à magnétisation orientée, alors que l'autre pièce (1a) est munie d'un capteur magnéto résistif (16) ;
ledit outil électroportatif comportant encore une carte électronique de contrôle et gestion comprenant un microprocesseur, cette carte électronique étant configurée pour permettre d'analyser les informations électriques analogiques ou numériques émises par chaque capteur magnéto résistif (14, 16), suivant l'inclinaison des lignes de champ magnétique qui lui sont présentées, pour commander le fonctionnement de l'actionneur (8) afin de positionner avec précision l'organe mobile (2), suivant la position du dispositif de commande (6).

2. Outil électroportatif, en particulier sécateur électrique ou électronique, selon la revendication 1, comportant un corps (1) conformé pour servir de poignée et à l'une des extrémités duquel est monté un organe actif mobile (2) dont les déplacements sont assurés par un actionneur (8), **caractérisé en ce que** l'organe mobile de l'actionneur (8) est muni d'un aimant à magnétisation orientée (13) qui peut être déplacé devant un capteur magnéto résistif (14) fixé dans le corps (1).

3. Outil électroportatif, en particulier sécateur électrique ou électronique, selon l'une des revendications 1 ou 2, comportant un corps (1) conformé pour servir de poignée et à l'une des extrémités duquel est monté un organe actif mobile (2) dont les déplacements sont assurés par un actionneur (8) et une gâchette (6) permettant de commander le fonctionnement dudit actionneur, via une carte électronique de commande et de contrôle, **caractérisé en ce que** la gâchette (6) est munie d'un aimant à magnétisation orientée (15) qui peut être déplacé devant un capteur magnéto résistif (16) fixé sur un élément fixe (1a) solidaire du corps.

4. Outil électroportatif, en particulier sécateur électrique ou électronique, selon les revendications 2 et 3, **caractérisé en ce que** l'organe mobile de l'actionneur (8) et la gâchette (6) sont munis d'un aimant à magnétisation orientée (13, 15) qui peut être déplacé devant un capteur magnéto résistif (14, 16) fixé sur un élément fixe (1a, 1c) du corps, ou solidaire dudit corps.

5. Outil électroportatif, en particulier sécateur électrique ou électronique, selon l'une quelconque des revendications 2 à 4, comportant au moins un organe actif mobile (2) monté à l'extrémité antérieure d'un corps (1) conformé pour servir de poignée et à l'intérieur duquel est logé un moto-réducteur électrique (5) dont la sortie est reliée audit organe actif mobile (2) par l'intermédiaire d'un système de transmission comportant une pièce mobile d'entraînement ou actionneur (8), ce sécateur électrique comprenant encore une gâchette pivotante (6) et une carte électronique de commande activée par cette dernière, **caractérisé en ce qu'**un capteur magnéto résistif (16) est monté fixement sur un élément (1a) solidaire du corps (1), et l'extrémité libre de la gâchette (6) est munie d'un aimant à lignes de champ magnétique orientées (15), qui peut être déplacé en regard dudit capteur magnéto résistif, par le pivotement de ladite gâchette.

6. Outil électroportatif, en particulier sécateur électrique ou électronique, selon l'une quelconque des revendications 2 à 5, dont l'actionneur est constitué par l'écrou (8) d'un système vis-écrou à billes (8-9), **caractérisé en ce qu'**un capteur magnéto résistif (14) est monté fixement dans le corps (1) de l'outil, et un aimant à lignes de champ magnétique orientées (13) est rendu solidaire de l'écrou mobile du système vis-écrou à billes, et cet aimant à lignes de champ magnétique orientées (13) peut être déplacé devant ledit capteur magnéto résistif (14), par l'activation dudit système vis-écrou, (8-9).

## Patentansprüche

1. Tragbares Elektrowerkzeug, insbesondere elektrische oder elektronische Schere von der Art, welche mit einem Körper (1) ausgebildet sind der als Griff dient und an dessen einem Ende ein bewegliches Betätigungselement (2) montiert ist umfassend:
- auf der einen Seite einen Aktuator (8), welcher zwei zusammenwirkende Teile (8, 1 c) umfasst, wobei wenigstens der eine (8) linearbeweglich oder um einen Winkel bewegbar ausgebildet ist, wobei das bewegliche Teil (8) von diesem Aktuator (8) die Verlagerungen des genannten Betätigungselement (2) sicherstellt; und
- auf der anderen Seite eine Steuereinrichtung (6) vorgesehen ist zum Steuern des Betriebs des Aktuators (8), wobei die Steuereinrichtung zwei zusammenwirkende Teile (6, 1a) umfasst, von dem wenigstens der eine entlang einer Linearbewegung oder Winkelbewegung beweglich ist,
**dadurch gekennzeichnet dass**:
- auf der einen Seite das eine der zusammenwirkenden Teile des genannten Aktuators (8) mit einem Magneten (13) mit gerichteter Magnetisierung ausgebildet ist, während der andere Teil (1c) mit einem magnetoresistiven Sensor (14) ausgestattet ist, und
- auf der anderen Seite einer der zusammenwirkenden Teile der genannten Steuereinrichtung (6) mit einem Magneten (15) mit gerichteter Magnetisierung ausgestattet ist und ferner der andere Teil (1a) mit einem magnetoresistiven Sensor (16) versehen ist;
wobei das tragbare Elektrowerkzeug ferner eine elektronische Karte zum Steuern und Regeln umfassend einen Mikroprozessor aufweist, wobei diese elektronische Karte ausgebildet ist um analoge oder digitale elektrische Informationen auszuwerten, welche von jedem magnetoresistiven Sensor (14, 16) entsprechend der Krümmung der dort vorhandenen Magnetfeldlinien ausgegeben werden, um den Betrieb des Aktuators (8) zur genauen Positionierung des beweglichen Elements (2) in Abhängigkeit von der Stellung der Steuervorrichtung (6) zu steuern.

2. Tragbares Elektrowerkzeug, insbesondere elektrische oder elektronische Schere gemäß Anspruch 1, umfassen einen Körper der als Griff ausgebildet ist und an dessen einem Ende ein bewegliches Betätigungselement (2) angeordnet ist, dessen Bewegung durch einen Aktuator (8) sichergestellt wird, **dadurch gekennzeichnet, dass** das bewegliche Element des Aktuators (8) mit einem Magneten mit gerichteter Magnetisierung (13) ausgestattet ist, welcher vor einem magnetoresistiven Sensor (14) in dem Körper (8) betätigt werden kann.

3. Tragbares Elektrowerkzeug, insbesondere eine elektrische oder elektronische Schere gemäß einem der Ansprüche 1 oder 2, umfassend einen Körper der als Griff ausgebildet ist und an dessen einem Ende ein bewegliches Betätigungselement (2) angeordnet ist, dessen Bewegung durch einen Aktuator (8) und einen Auslöser (6) zur Steuerung des Betriebs des genannten Aktuators über eine elektronische Steuer- und Regelungskarte betrieben wird, **dadurch gekennzeichnet dass** der Auslöser (6) mit einem Magneten mit gerichteter Magnetisierung (15) ausgebildet ist, welcher vor einen magnetoresistiven Sensor (16) bewegt werden kann, welcher auf einem ersten, stationären gemeinsamen Element an dem Körper (1a) befestigt ist.

4. Tragbares Werkzeug, insbesondere elektrische oder elektronische Schere gemäß den Ansprüche 2 und 3, **dadurch gekennzeichnet dass** das bewegliche Element des Aktuators (8) und des Auslösers (6) ausgebildet sind mit einem Magneten mit gerichteter Magnetisierung (13, 15), welche vor einem magnetoresistiven Sensor bewegt werden können, der auf einem ersten Element (1a, 1c) des Körpers oder einem gemeinsamen Element des genannten Körpers befestigt ist.

5. Tragbares Elektrowerkzeug, insbesondere elektrische oder elektronische Schere gemäß einem der Ansprüche 2 bis 4, umfassend wenigstens ein bewegliches Betätigungselement (2), das am vorderen Ende des Körpers (1) montiert ist, ausgebildet um als Griff zu dienen und in dessen Inneren ein elektrischer Getriebemotor (5) untergebracht ist, dessen Ausgang mit dem beweglichen Betätigungsteil (2) mittels eines Übertragungssystems verbunden ist, welches eine bewegliche Betätigungseinrichtung oder ein Aktuator (8) aufweist, wobei die elektrische Schere ferner einen drehenden elektrischen Auslöser (6) und eine elektronische Steuerkarte aufweisen, die durch diese aktivierbar ist, **dadurch gekennzeichnet, dass** ein magnetoresistiver Sensor (16) fest auf einem gemeinsamen Element des Körpers (1) montiert ist und das freie Ende des Auslösers (6) mit einem Magneten ausgebildet ist mit gerichteten Magnetfeldlinien (15) und dieser in Bezug auf den genannten magnetoresistiven Sensor bewegt werden kann, durch die Schwenkbewegung des genannten Auslösers.

6. Tragbares Elektrowerkzeug, insbesondere elektrische oder elektronische Schere gemäß einem der Ansprüche 2 bis 5, von dem der Aktuator durch eine Mutter (8) eines Schrauben-Mutter-Systems (8-9) gebildet wird, **dadurch gekennzeichnet, dass** ein magnetoresistiver Sensor (14) fest in den Körper (1) des Werkzeugs befestigt ist und ein Magnet mit gerichteten Magnetfeldlinien gemeinsam mit der beweglichen Mutter des Schrauben-Mutter-Systems gesichert ist und der Magnet mit den gerichteten Magnetfeldlinien (13) vor den besagten magnetoresistiven Sensor (14) bewegt werden kann, durch die Betätigung des Schrauben-Muttersystems (8-9).

## Claims

1. A portable electric tool, in particular an electric or electronic secateur, of the kind comprising a body (1) shaped to act as a handle and at one of the ends of which is mounted a movable active member (2) and comprising:
- on the one hand an actuator (8) comprising two co-operating parts (8, 1c) of which one (8) at least is movable with a linear or angular movement, the movable part (8) of said actuator providing for the displacements of the movable member (2), and
- on the other hand a control device (6) for controlling operation of the actuator (8), said device comprising two co-operating parts (6, 1a), of which one (6) at least is movable with a linear or angular movement, **characterised in that**
- on the one hand one of the co-operating parts of said actuator (8) is provided with a magnet (13) involving oriented magnetisation while the other part (1c) is provided with a magneto-resistive sensor (14), and
- on the other hand one of the co-operating parts of said control device (6) is provided with a magnet (15) involving oriented magnetisation while the other part (1a) is provided with a magneto-resistive sensor (16);
said portable electric tool further comprising an electronic control and management board comprising a microprocessor, said electronic board being configured to make it possible to analyse the electric analog or digital information emitted by each magneto-resistive sensor (14, 16) in accordance with the inclination of the magnetic field lines which are presented to it, to control operation of the actuator (8) in order to precisely position the movable member (2) in accordance with the position of the control device (6).

2. A portable electric tool, in particular an electric or electronic secateur, according to claim 1, comprising a body (1) shaped to serve as a handle and at one of the ends of which is mounted a movable active member (2) of which the movements are implemented by an actuator (8), **characterised in that** the movable member of the actuator (8) is provided with a magnet (13) involving oriented magnetisation, which can be displaced in front of a magneto-resistive sensor (14) fixed in the body (1).

3. A portable electric tool, in particular an electric or electronic secateur, according to claim 1 or claim 2, comprising a body (1) shaped to serve as a handle and at one of the ends of which is mounted a movable active member (2) of which the movements are implemented by an actuator (8) and a trigger (6) for controlling the operation of said actuator by way of an electronic command and control board, **characterised in that** the trigger (6) is provided with a magnet (15) involving oriented magnetisation, which can be displaced in front of a magneto-resistive sensor (16) fixed on a fixed element (1a) which is fixed with respect to the body.

4. A portable electric tool, in particular an electric or electronic secateur, according to claims 2 and 3, **characterised in that** the movable member of the actuator (8) and the trigger (6) are provided with a magnet (13, 15) involving oriented magnetisation, which can be displaced in front of a magneto-resistive sensor (14, 16) fixed on a fixed element (1a, 1c) of the body, or fixed with respect to said body.

5. A portable electric tool, in particular an electric or electronic secateur, according to any one of claims 2 to 4, comprising at least one movable active member (2) mounted at the front end of a body (1) which is shaped to serve as a handle and in the interior of which is accommodated an electric motor-reducing unit (5) whose output is connected to said movable active member (2) by way of a transmission system comprising a movable drive or actuating part (8), said electric secateur also comprising a pivotable trigger (6) and an electronic command board activated by said trigger, **characterised in that** a magneto-resistive sensor (16) is mounted fixedly on an element (1a) which is fixed with respect to the body (1) and the free end of the trigger (6) is provided with a magnet having oriented magnetic field lines (15), which can be displaced in facing relationship with said magneto-resistive sensor by the pivotal movement of said trigger.

6. A portable electric tool, in particular an electric or electronic secateur, according to any one of claims 2 to 5, of which the actuator is formed by the nut (8) of a ball-type screw-nut system (8-9), **characterised in that** a magneto-resistive sensor (14) is mounted fixedly in the body (1) of the tool, and a magnet (13) with oriented magnetic field lines is fixed with respect to the movable nut of the ball-type screw-nut system and said magnet (13) with oriented magnetic field lines can be displaced in front of said magneto-resistive sensor (14) by the activation of said screw-nut system (8-9).
